# EUROPÄISCHE PATENTANMELDUNG

(11) **EP 1 000 731 A1**
(43) Veröffentlichungstag der Anmeldung: **17.05.2000**
(21) Anmeldenummer: 98121608.8
(22) Anmeldetag: 12.11.1998
(51) Int. Cl.: B29C 63/16, B44C 1/17

(54) **Vorrichtung zum Aufbringen eines Dekors auf ein Werkstück**

(71) Anmelder: Bush Industries, Inc., Jamestown, N.Y. 14702-0460 (US)
(72) Erfinder: Walter, Thomas Dr., 26133 Oldenburg (DE); Zaher, Maximilian, 26125 oldenburg (DE); Kampmeier, Franz, 33449 Langen-Benteler (DE)
(74) Vertreter: von Hellfeld, Axel, Dr. Dipl.-Phys.

(57) **Zusammenfassung**

Eine Vorrichtung zum Aufbringen eines Farbdekors auf ein Werkstück (16) weist folgendes auf:
- einen Flüssigkeitsbehälter (10) mit einer unter Druck setzbaren Flüssigkeit (12),
- eine elastische Membran (14) über der Flüssigkeit (12),
- eine Einrichtung (28) zum Erzeugen von Druck in der Flüssigkeit (12), und
- eine über der Membran (14) angeordnete Platte (20), gegen die ein zu dekorierendes Werkstück (16) mittels der Membran (14) andrückbar ist.

## Beschreibung

Die Erfindung betrifft eine Vorrichtung zum Aufbringen eines Dekors auf ein Werkstück.

Insbesondere betrifft die Erfindung das Aufbringen eines Farbdekors auf ein Werkstück unter Verwendung eines Trägers mit sogenannten "Release"-Eigenschaften.

Als Material für das Werkstück kommen hier insbesondere in Betracht: Holz, Holzwerkstoffe, Keramikkörper und anderes, insbesondere poröse, d.h. luftdurchlässige Materialien.

Träger mit "Release"-Eigenschaften sind als solche bekannt (vgl. EP 0 573 676 A1). Als flächige Träger mit "Release"-Eigenschaften kommen insbesondere in Betracht bestimmte Papiere oder auch Kunststofffolien, die an ihrer Oberfläche so gestaltet bzw. präpariert sind, daß unter bestimmten Bedingungen aufgetragene Farbschichten oder Lackschichten in der Art eines "Abpellens" (wie ein Abziehbild) auf ein Substrat übertragbar sind. Für die hier vorliegende Erfindung kommen insbesondere als Träger mit "Release"-Eigenschaft Kunststofffolien, wie insbesondere Polyesterfolien, in Betracht, die eine geeignete Trennschicht aufweisen, um die "Release"-(Abpell)-Eigenschaft zu erreichen.

Die genannte EP 0 573 676 A1 beschreibt bereits die Verwendung eines Trägers mit "Release"-Eigenschaft zum Auftragen von Farbdekor auf ein Substrat. Bei diesem Stand der Technik wird zu diesem Zweck zunächst ein Farbdekor auf einen Träger mit "Release"-Eigenschaft aufgebracht, danach über das auf den Träger aufgebrachte Farbdekor ein Lack aufgetragen, der Lack anschließend teilvernetzt und danach unter Druck und/oder erhöhter Temperatur der teilvernetzte Lack mitsamt dem Farbdekor vom Träger auf das letztlich zu dekorierende Substrat so übertragen, daß der Lack unter dem Farbdekor auf dem Substrat aufliegt. Abschließend erfolgt dort eine weitere Vernetzung des Lackes auf dem Substrat.

Die europäische Patentanmeldung 98 119 331.1 beschreibt verschiedene Verfahren zum Aufbringen eines Farbdekors auf Substrate (Werkstücke). Die dort beschriebenen Verfahren werden bevorzugt bei der vorliegenden Erfindung, d.h. bei Verwendung der erfindungsgemäßen Vorrichtung, eingesetzt. Der Inhalt der europäischen Patentanmeldung 98 119 331.1 wird durch Bezugnahme auch zum Inhalt der vorliegenden Anmeldung gemacht. Dies bedeutet insbesondere, daß die in der genannten europäischen Patentanmeldung beschriebenen Verfahren zum Aufbringen eines Farbdekors auf ein Werkstück mit einer Vorrichtung gemäß der vorliegenden Erfindung durchgeführt werden sollen und daß die vorliegende Erfindung unter anderem auch die Verwendung der beschriebenen Vorrichtung zur Durchführung der Verfahren gemäß EP 98 119 331.1 betrifft.

Dies gilt insbesondere für die folgenden Verfahrensvarianten:
a) Ein Farbdekor wird auf einen flächigen Träger mit "Release"-Eigenschaft aufgebracht,
b) über das auf den Träger aufgebrachte Farbdekor wird eine erste Lackschicht aufgetragen,
c) der aufgetragene Lack wird teilvernetzt,
d) der teilvernetzte Lack mitsamt dem Farbdekor wird vom Träger auf das Substrat so übertragen, daß der Lack unter dem Farbdekor auf dem Substrat aufliegt und der Träger vom Farbdekor entfernt wird,
e) über das auf das Substrat übertragene Farbdekor wird eine weitere Lackschicht aufgetragen, und
f) die Lackschichten werden mittels Strahlung gehärtet.

Gemäß einer zweiten Verfahrensvariante eignet sich die weiter unten beschriebene erfindungsgemäße Vorrichtung gemäß der vorliegenden Anmeldung auch für folgendes Verfahren:
a) Ein Farbdekor wird auf einen flächigen Träger mit "Release"-Eigenschaft aufgebracht,
b) über das auf den Träger aufgebrachte Farbdekor wird eine Kleberschicht aufgetragen,
c) das Farbdekor mit dem Kleber wird so auf das Substrat übertragen, daß der Kleber unter dem Farbdekor auf dem Substrat aufliegt und der Träger vom Farbdekor entfernt wird,
d) über das auf das Substrat übertragene Farbdekor wird eine Lackschicht aufgetragen, und
e) die Lackschicht wird gehärtet und dabei wird der Kleber durch Wärme aktiviert, um eine vollständige Verklebung mit dem Substrat zu erreichen.

Nach vorstehendem Schritt (b) kann der Kleber getrocknet oder teilweie getrocknet werden.

Eine dritte, mit der Vorrichtung gemäß der vorliegenden Erfindung bevorzugt ausführbare Verfahrensvariante sieht folgende Schritte vor:
a) Auf einen Träger mit "Release"-Eigenschaft wird ein härtbarer Lack aufgetragen,
b) der härtbare Lack wird gehärtet oder zumindest teilweise gehärtet;
c) auf den Lack wird ein Farbdekor aufgebracht,
d) auf das Farbdekor wird ein Kleber aufgebracht,
e) vom Träger mit "Release"-Eigenschaft werden die genannte Lackschicht, das Dekor und die Kleberschicht so auf das zu dekorierende Substrat aufgetragen, daß die Kleberschicht zu unterst auf dem Substrat aufliegt, wobei der Kleber durch Druck und/oder Wärme zum Verkleben auf dem Substrat aktiviert wird.

Die Trocknung eines Lackes im obigen Sinn erfolgt bevorzugt mit UV-Strahlung. Bei Verwendung von Kleber wird dieser bevorzugt mittels Wärme getrocknet oder teilgetrocknet.

Der vorliegenden Erfindung liegt das technische Problem zugrunde, eine Vorrichtung zum Aufbringen eines Farbdekors auf ein Werkstück bereitzustellen, mit der insbesondere die oben genannten Verfahren qualitativ hochwertige Dekorierungen ergeben. Dies soll insbesondere für Werkstücke gelten mit dreidimensionaler Struktur, d.h. einer Profilierung. Bei solchen Werkstücken ist eine saubere und formtreue Dekorierung mit den oben genannten Techniken beim Stand der Technik ein Problem und die Erfindung soll eine Vorrichtung bereitstellen, mit der auch solche Werkstücke qualitativ hochwertig dekorierbar sind, insbesondere auch im Kantenbereich.

Die erfindungsgemäße Vorrichtung zur Lösung dieser technischen Probleme ist versehen mit:
- einem Flüssigkeitsbehälter mit einer unter Druck setzbaren Flüssigkeit,
- einer elastischen Membran über der Flüssigkeit,
- einer Einrichtung zum Erzeugen von Druck in der Flüssigkeit, und
- einer über der Membran angeordneten Platte, gegen die ein zu dekorierendes Werkstück mittels der Membran andrückbar ist.

Mit einer solchen Vorrichtung lassen sich die oben genannten Verfahren mit sehr guten Dekorationsergebnissen ausführen. Dabei wird der Träger mit "Release"-Eigenschaft als Folie zwischen die genannte Membran und das Werkstück gelegt, wobei das Werkstück von oben von der Platte abgestützt wird. Durch Druckerhöhung in der Flüssigkeit wird die Membran nach oben um das Werkstück gedrückt. Dabei bewirkt die Membran eine formtreue, ganzflächige Anlage der Folie (des Trägers) am Werkstück, auch in kritischen Bereichen mit dreidimensionaler Struktur (Profilierung) und im Kantenbereich des Werkstückes.

Gemäß einer bevorzugten Ausgestaltung der Erfindung kann die Anlage der Folie am Werkstück durch Vakuum (Unterdruck) gefördert werden, das in Kanälen in der Platte erzeugt wird. Ist das zu dekorierende Werkstück aus Holz oder einem Holzwerkstoff oder einem anderen porösen Material, wird die positive Wirkung des Unterdruckes noch dadurch gefördert, daß auch im Bereich des Werkstückes selbst ein Ansaugeffekt auftritt, der den Übergang des Farbdekors vom Träger auf das Werkstück fördert, insbesondere zieht sich die Folie auch im Kantenbereich glatt über das Werkstück weit über dessen Frontseite hinaus.

Die erfindungsgemäße Vorrichtung ist bevorzugt so ausgestaltet, daß die Membran auf Temperaturen von 80 bis 160°C heizbar ist. Die Heizung kann in einfacher Weise dadurch erreicht werden, daß die Flüssigkeit, mit der die Membran in ganzflächigem Kontakt steht, auf eine entsprechende Temperatur gebracht wird.

Weiterhin ist die Vorrichtung bevorzugt so ausgestaltet, daß in der Flüssigkeit Drucke von 3 bis 20 bar oder sogar bis 40 bar erzeugt werden können. Die Druckerzeugung erfolgt bevorzugt mit hydraulischen Mitteln.

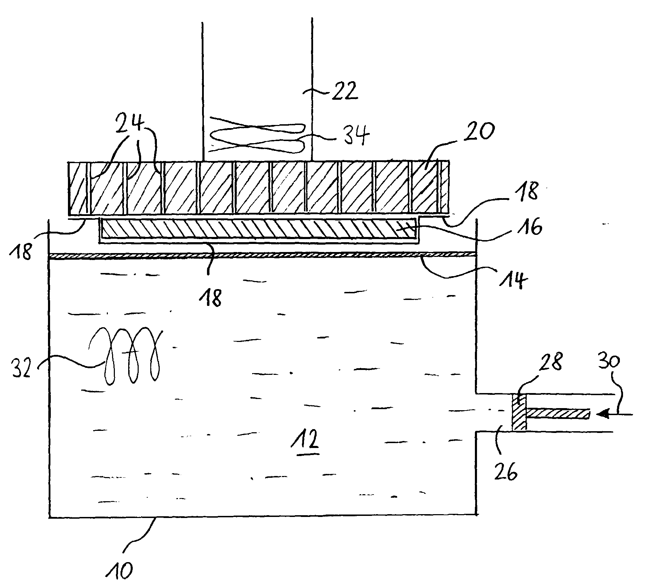

Nachfolgend wird ein Ausführungsbeispiel der Erfindung anhand der Zeichnung näher beschrieben.

Die Figur zeigt schematisch eine Vorrichtung zum Aufbringen eines Dekors auf ein Werkstück.

Ein Flüssigkeitsbehälter 10 ist mit einer Flüssigkeit gefüllt. Der Flüssigkeitsbehälter 10 hat Z.B. Abmessungen im Meterbereich. Als Flüssigkeit ist ein Öl vorgesehen, z.B. ein Siliconöl oder ein Öl auf Glykolbasis. Die Flüssigkeit soll bei hohen Temperaturen möglichst chemisch inert sein und bei den weiter unten genannten Temperaturen möglichst keine Gasbildung zeigen.

Auf der Oberfläche der Flüssigkeit 12 liegt ganzflächig eine Membran 14 aus elastischem Material, wie Z.B. Silicon, Fluorkautschuk oder dergleichen. Das Material der Membran 14 ist so gewählt, daß auch bei den genannten hohen Temperaturen und Drücken keine chemische Reaktion mit der Flüssigkeit 12 auftritt. Die Membran 14 ist möglichst elastisch und dehnbar. Zwischen der Membran 14 und der Flüssigkeit 12 ist kein Gas.

Auf die Membran 14 wird zunächst eine Folie 18 aufgelegt. Die Folie 18 ist ein Träger mit "Release"-Eigenschaften im oben beschriebenen Sinn. Das Farbdekor ist auf die Folie 18 aufgebracht worden und über das Farbdekor ist eine Kleberschicht aufgetragen. Die Kleberschicht wird zunächst getrocknet oder zumindest teilgetrocknet (vergleiche die eingangs genannten Verfahrensschritte a) bis c) bzw. b) bei den Varianten eins und zwei bzw. a) bis d) bei Variante drei. Die Kleberschicht ist also oben, dem Werkstück 16 zugekehrt.

Eine Platte 20 stützt das zu dekorierende Werkstück 16 von oben ab, d.h. die Platte 20 drückt von oben auf das Werkstück 16. Die Platte 20 wird von einem Pfosten 22 abgestützt, mit dem die Platte 20 auch vertikal anhebbar und absenkbar ist. In der Platte 20 sind Kanäle 24 ausgeformt, um an der Unterseite der Platte 20 in einer Vielzahl von Öffnungen einen Unterdruck zu erzeugen. Die Vakuumpumpe ist in der Figur nicht gesondert dargestellt.

Um in der Flüssigkeit 12 einen Druck zu erzeugen, ist ein Kolben 28 in einem Zylinder 26 gemäß dem Pfeil 30 verschiebbar, wobei der Zylinder 26 in Fluid-Verbindung mit dem Inneren des Flüssigkeitsbehälters 10 steht.

Eine Heizeinrichtung 32 dient zum Heizen der Flüssigkeit 12 und damit der Membran 14, die in ganzflächigem Wärmekontakt und mechanischem Kontakt mit der Flüssigkeit steht. Eine Heizeinrichtung 34 dient zum Heizen der Platte 20.

Die Figur zeigt die Bauteile nur schematisch, dies gilt insbesondere für die Membran 14, die Folie 18 und das Werkstück 16. Das Werkstück 16 kann eine relativ komplizierte dreidimensionale Struktur (Profilierung) aufweisen, die in der Figur nicht dargestellt ist.

Die Funktion der Vorrichtung ist wie folgt:

Zunächst wird auf eine Folie 18, die ein Träger mit "Release"-Eigenschaft ist, ein Farbdekor aufgetragen. Über das auf den Träger aufgebrachte Farbdekor wird eine Kleberschicht auf getragen. Die Kleberschicht kann dann gegebenenfalls getrocknet oder teilgetrocknet werden. Damit ist die Folie geeignet, in der dargestellten Vorrichtung eingesetzt zu werden. Sie wird auf die Membran 14 gelegt. Danach wird die Platte 20 soweit abgesenkt, daß sie mit der Oberseite des zu dekorierenden Werkstückes 16 in Eingriff kommt und somit verhindert, daß während der nachfolgenden Verfahrensschritte das Werkstück 16 nach oben bewegt wird. Bis dahin ist in der Flüssigkeit 12 noch kein Druck mittels des Kolbens 28 erzeugt worden. Die Membran ist auf eine Temperatur im Bereich von 80 bis 160°C gebracht worden und die Platte 20 auf eine Temperatur von 70°C bis 140°C z.B. 100°C.

Anders als in der Figur dargestellt, liegen in diesem Zustand die Bauteile dicht aneinander, d.h. die Folie 18 liegt auf der Membran 14, das Werkstück 16 liegt auf der Folie 18 und die Platte 20 liegt dicht auf dem Werkstück 16.

Dann wird insbesondere gleichzeitig Vakuum an die Kanäle 24 angelegt und der Druck in der Flüssigkeit 12 mittels des Kolbens 28 (der nur schematisch angedeutet ist) auf Werte von 3 bis 20 bar, je nach Struktur des Werkstückes, erhöht. Dabei legt sich die Folie 18 formtreu ganzflächig an das Werkstück 16, mit dem Kleber zuunterst am Werkstück. Besteht das Werkstück 16 aus einem zumindest teilweise porösen Material, wie z.B. Holz oder einem Holzwerkstoff, wird die Anlage der Folie 18 am Werkstück noch verbessert.

Wichtig für das vorstehend beschriebene Verfahren ist, daß bei stationärem Werkstück, also feststehender Platte 20, die Membran 14 mittels des in der Flüssigkeit 12 hydraulisch erzeugten Drukkes nach oben gedrückt wird und dabei die Folie 18 in der beschriebenen Weise perfekt, insbesondere auch im Bereich von Profilierungen und in Kantenbereich, an das Werkstück 16 drückt. Dabei verformt sich die Membran 14 aufgrund ihrer elastischen Dehnbarkeit und beaufschlagt lückenlos die Folie 18 so, daß sie an das Werkstück 16 gedrückt wird mit dazwischenliegendem Farbdekor und Kleberschicht.

Danach wird der Druck aus der Flüssigkeit 12 genommen und die Membran kehrt in die in der Figur dargestellte Ausgangsgestalt zurück. Das Werkstück kann aus der Vorrichtung entnommen werden und die Folie kann abgezogen werden. Danach kann das Produkt weiterverarbeitet werden, z.B. durch Auftragung einer Lackschicht über das in der vorstehenden Weise übertragene Farbdekor und gegebenenfalls Härtung des Lackes und vollständige Verklebung mittels Wärme oder Strahlung.

## Patentansprüche

1. Vorrichtung zum Aufbringen eines Dekors auf ein Werkstück (16) mit:
- einem Flüssigkeitsbehälter (10) mit einer unter Druck setzbaren Flüssigkeit (12),
- einer elastischen Membran (14) über der Flüssigkeit (12),
- einer Einrichtung (28) zum Erzeugen von Druck in der Flüssigkeit (12), und
- einer über der Membran (14) angeordneten Platte (20), gegen die ein zu dekorierendes Werkstück (16) mittels der Membran (14) andrückbar ist.

2. Vorrichtung nach Anspruch 1, dadurch gekennzeichnet, daß in der Platte (20) Kanäle (24) ausgeformt sind, in denen ein Unterdruck erzeugbar ist.

3. Vorrichtung nach einem der Ansprüche 1 oder 2, gekennzeichnet durch eine Heizeinrichtung (34) für die Platte (20).

4. Vorrichtung nach einem der vorhergehenden Ansprüche, gekennzeichnet durch eine Heizeinrichtung (32) für die Flüssigkeit (12) und/oder die Membrane (14).

5. Vorrichtung nach einem der vorhergehenden Ansprüche, gekennzeichnet durch eine Einrichtung (28) zum Erzeugen von bis 20 bar, insbesondere bis 40 bar, Druck in der Flüssigkeit (12).
